# EUROPEAN PATENT APPLICATION

(11) **EP 4 105 852 A1**
(43) Date of publication of application: **21.12.2022**
(21) Application number: 21179201.5
(22) Date of filing: 14.06.2021
(51) Int. Cl.: G06Q 10/00, G06Q 50/16

(54) **SYSTEM AND METHOD IN A TELECOMMUNICATION NETWORK FOR A QUICK OPENING OF A DOOR, AND A CONTACT SERVICE TO BE USED IN THE METHOD**

(71) Applicant: KH-Korhonen Oy, 00720 Helsinki (FI)
(72) Inventor: Korhonen, Jani, Vantaa (FI)
(74) Representative: Boco IP Oy Ab

(57) **Abstract**

The system of the invention works in a telecommunication network and enables a quick opening of a door of a building. The system comprises a contact service (3) connected to a register with information for opening a door in the building. A help center (2) receives calls caused by an event related to the building and communicates with said contact service (3) for fetching information for door opening. A door opening service (5) serves said building and communicates with the help center (2) by receiving a request therefrom for opening a door in the building related to said event call. The method of the invention comprises receiving at a help center (2) a call related to an event in a building or in a part of the building. The help center (2) fetches contact information for door opening related to the building from a contact service (3) that holds a register with such information. The help center (2) requests a door opening service (5) to perform opening of a door in the building and/or part of the building related to said event. The contact service (3) of the invention is used in the method of the invention and has a register with information for opening one or more doors in one or more buildings. The contact service (3) has means for communicating with and sending or giving access to such information via the telecommunication network to trusted users upon request.

## Description

### TECHNICAL FIELD

The invention is concerned with a system and method in a telecommunication network for enabling a quick opening of a door at an event, such as at an emergency or other imperative situation. The invention is also concerned with a contact service to be used in the method.

### BACKGROUND

Door opening services are needed when people are locked out from their homes and have forgotten the key inside.

Another common problem arises in connection with accidents and disease attacks when a door to an apartment has to be opened from the outside for rescue or ambulance staff. Furthermore, in case of fires or acts of violence, fire brigades or the police or other authority might need to enter the apartment or the stairway of an apartment.

In such situations, it should not take a too long time to open the door.

There is, however, unnecessary delay until a door opening service can open a door in an event of emergency.

An ambulance or the police might e.g. be called via an external alarm receiving center also called emergency response centers or just emergency centers. Emergency response centres are, however, usually just the first step in the emergency response chain for help and safety. When emergency response centres receive emergency calls for the rescue, police or health and social services, they relay the information they receive to the appropriate assisting authorities or partners.

Door opening services are intended to guarantee access to an apartment in the events of the above kind but can only be used by a tenant or owner of the apartment that is officially registered for the service, and there can be a cadastral registry for that.

Most housing and property companies use maintenance companies for taking care of the door opening or of such a service.

Usually, an opening of a door is not ordered until the rescue staff or the like has arrived to a house and can order it by reading the contact information of the door opening service from the door or a wall of the house and call the door opening service. Thus, the duty officer of the maintenance company or other door opening service will not get the door opening task until said call is received that late.

The object of the invention is to make a quicker action possible.

### SUMMARY

The system of the invention works in a telecommunication network and enables a quick opening of a door of a building. The system comprises a contact service connected to a register with information for opening a door in the building. A help center receives calls caused by an event related to the building and communicates with said contact service for fetching information for door opening. A door opening service serves said building and communicates with the help center by receiving a request therefrom for opening a door in the building related to said event call.

The method of the invention in the telecommunication network comprises receiving an event call at a help center. The call is related to an event in a building or in a part of the building. The help center fetches contact information for door opening related to the building and/or a part of the building from a contact service that holds a register with such information. The help center requests a door opening service to perform opening of a door in the building and/or part of the building related to said event.

The contact service of the invention is used in the method of the invention and has a register with information for opening one or more doors in one or more buildings. The contact service has means for communicating with and sending or giving access to such information via the telecommunication network to trusted users upon request.

The preferable embodiments of the invention have the features of the sub claims.

The help center can itself be a rescues service or it can act on the event by sending a help request to a rescue service for getting help to the building after having received the event call.

The invention is in the first hand intended for an event that is an emergency situation, such as an accident, a disease attack, a violence situation, a crime, a fire, or a collection.

The information for door opening comprises contact information to a door opening service or other company or entity that is responsible for opening a door or doors of a building, such as a maintenance company, a property service, a property company or the like.

The contact information is associated with the information of at least one of the following of a list including targets like the address of the building, the real estate company of the building, the owner of the building, and/or tenant of the building or of a part of the building or other manager or person or company with rights to the building or part of the building, such as to an apartment of the building.

The service of the invention has a register with said contact information for opening doors in a building or part of a building and means for sending or giving access to such information to trusted users upon request.

In addition to contact information to a door opening service, which contact information matches a given door opening service with one or several of the above list, also other information can be stored in the register and associate it to the targets of the list, such as contact information of the house manager and links or information to invoicing and other services. Thus, the service can be a general contact service for one or more of those in the list.

A trusted user is a user that has been given the right to fetch and get the information for opening doors in a building or part of a building in question and to send requests for the opening of doors in the building or part of the building in question or with which a contract has been made for managing this information at door opening requests. Such a trusted user can e.g. be a help center, an alarm receiving center, an emergency response center, an emergency center, the police, a rescue service, an ambulance center, a health service, a social service or a fire brigade, or some other user that has been given the rights by e.g. the real estate company or the owner or the like as listed up above.

The contact service is in the first hand an application to provide help for rescue services and authorities and can be ordered as a remote use service. It assists and speeds up the receiving of responsibility/contact information of a target or property even before the rescue personnel arrives.

The service can be realized as a downloaded application service or as a cloud service via a home page to be accessed through the Internet. It can also be integrated in an intranet, or a company's or organization's own operating system or internal network. A company or organization, such as the police, emergency center, or an ambulance service can e.g. integrate the service of the invention in a map service.

The service is an easy to use service for the trusted user that can call to a door opening service or the like after having received the contact information. A call can in one embodiment be performed directly via or from the service automatically upon a given call or by clicking on a function button.

In its simplest form, only the address of the property or building, which is the target for the door opening service, needs to be written for searching information from the service, where after the service fetches the correct contact information from the register to the door opening service or maintenance company that handles the door openings to the property or building in question.

The invention provides several advantages:
- To save time, the help center or rescue authority can agree on a door opening with the door opening service or the like also in advance by means of the contact service when the need for a door opening is not acute
- The help center can also be an authority that acts because of a crime or in a collection issue, whereby the contact service can be used for requesting the door opening at a time agreed on in advance
- Costs can be saved in situations, wherein a quick opening of the door is necessary and breaking the door can be avoided
- Delays in the opening of a door can be avoided
- Other information of the property and of the users of the service can be added to the register held by the application service, also other contact information, such as of the managing director of the property another responsible persons.

In the following, the invention is described in detail by referring to a figure. The invention is not restricted to the details of the following description.

### FIGURES

Figure 1 is an architecture view of an environment in which the invention can be applied
Figure 2 is signal diagram of an embodiment of the invention

### DETAILED DESCRIPTION

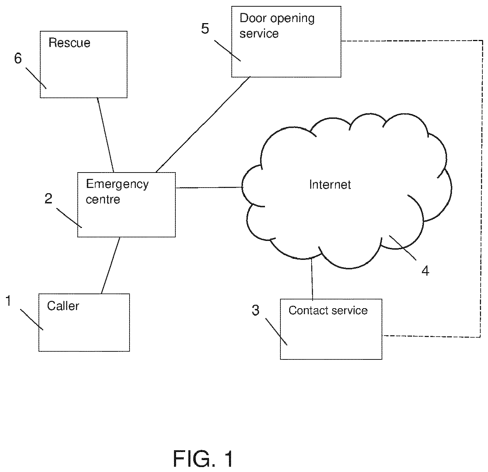

Figure 1 is an architecture view of a telecommunication network environment, in which the invention can be applied, and it is described in connection with an example case to which the invention is not restricted.

Reference number 1 is an entity, such as a telephone, a mobile terminal, a tablet, a laptop, a Personal Computer (PC) or other terminal, from which a caller that is in a situation of emergency calls or sends a message to a help center 2, such as an emergency center 2 or the like, of e.g. an accident that has happened in a certain building or in an apartment of a building. Depending on the type of accident or other event, the emergency center 2 can order a rescue team 6, e.g. an ambulance, to the building, wherein the accident took place.

The emergency center 2 has a contact service 3 in the form of a downloaded application or is in contact with a contact service 3 via the Internet 4 or the contact service 3 might be accessed within some internal operation system or be integrated in another service of the emergency center 3.

The contact service 3 can be in a server holding a register of addresses of buildings and their door opening service companies with contact information. A trusted user is one that has the right to send door opening request and to get information from the contact service 3. The trusted user is e.g. allowed by the real estate company or owner of the house or building and have registered itself for the contact service 3 that enables the trusted user, such as an emergency center 2, to fetch information for opening doors of a building. The emergency center 2 or the like might also have a public right or other stipulated right to use such a service and request door openings, whereby no registration is needed. Thus, the emergency center 2 can fetch contact information to door opening services that are connected to different buildings.

The emergency center 2 can then request a door opening service 5, which can be handled by a maintenance company serving said building or real estate company, to open a door in the building and/or apartment, wherein the accident took place.

The door opening service 5 might alternatively be contacted directly by the contact service 3 (illustrated by the dashed line in figure 1).

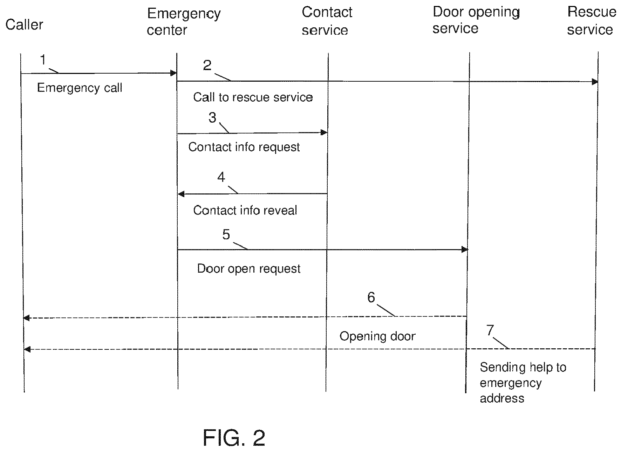

Figure 2 is signal diagram of an embodiment of the invention. In figure 2, it is shown that an emergency call or other event call is received by an emergency center from a caller in signal 1. The call is related to an event in a building or in an apartment of a building. In this embodiment, it is assumed that the call is coming from the same building, but it might come from a different place. Depending on the type of event, e.g. in a case of an accident, the emergency center calls a third party, such as a rescue service, in signal 2 for ordering help to the building or apartment of a building, such as orders an ambulance from e.g. a rescue service.

The emergency center then fetches contact information in signals 3 and 4 for door opening related to the building and/or an apartment of a building from a contact service working e.g. as a cloud service in the internet or in the form of an application. The contact service has a register that matches given addresses with the contact information to a door open service or maintenance service for the address informed in signal 1.

In signal 5, the emergency center requests the opening of a door from an entity taking care of the door opening service, such as a maintenance company, to go to the building to open the door in the building and/ or apartment related to said emergency call.

Step 6 illustrates the arrival of the door opening service to the building in order to open the door, which might be earlier than step 7, wherein the ambulance or other rescue arrives to the building.

Steps 6 and 7 are dashed lines to illustrate that they are manual and not part of the service of the invention as such.

In an embodiment of the invention, the rescue service or authority might itself be a trusted user and use the contact service for fetching contact information to the door opening service and to request the door opening service to open a door to a building related to a call or other event.

## Claims

1. A system in a telecommunication network for enabling a quick opening of a door of a building, the system comprising
a) a contact service (3) connected to a register with information for opening a door in a building, the information comprising contact information and the address of the building, the register matching contact information with the address informed by a help center, the contact service having means for communicating with and sending or giving access to such information via the telecommunication network to trusted users upon request,
b) a help center (2) receiving calls caused by an event related to the building and communicating with said contact service (3) for fetching information for door opening,
c) a door opening service (5) serving said building as a maintenance service or a property service and communicating with the help center (2) for receiving a request therefrom for opening a door in the building related to said event call.

2. System of claim 1, wherein the contact information to the door opening service (5) is associated with the information of at least one of an address of the building, the real estate company of the building, the owner of the building, and/or tenant of the building or other manager or person or company with rights to the building or part of the building, such as an apartment of the building.

3. System of claim 1 or 2, wherein the help center (2) is or has means for calling an alarm center, an emergency response center, the police, a rescue service, an ambulance center, a health service, a social service, a fire brigade, an authority, or other help or help service.

4. System of any of claims 1 - 3, wherein the event is an emergency situation, such as an accident, a disease attack, a violence situation, a crime, a fire, or a collection.

5. A method in a telecommunication network for enabling a quick opening of a door of a building at an event, the method comprising
a) receiving an event call at a help center (2), the call being related to an event in a building or in a part of a building,
b) the help center (2) fetching contact information for door opening related to the building and/or a part of the building from a contact service (3) holding a register with such information, the information comprising contact information and the address of the building, the register matching contact information with the address of the building informed by the help center, the contact service sending or giving access to the information via the telecommunication network to the help center (2),
c) the help center (2) requesting a door opening service (5), which is associated with a maintenance service or a property service, to perform opening of a door in the building and/or part of the building related to said event.

6. Method of claim 5, the help center (2) acting on the event by sending a help request to the building.

7. Method of claim 5 or 6, wherein the information for door opening comprises contact information to the door opening service (5) related to the building, which information is associated with the information of at least one of an address of the building, the real estate company of the building, the owner of the building, and/or tenant of the building or other manager or person or company with rights to the building or to a part of the building, such as to an apartment of the building.

8. Method of any of claims 5 - 7, wherein the help center (2) is or has means to call an alarm center, an emergency response center, the police, a rescue service, an ambulance center, a health service, a social service, a fire brigade, an authority, or other help or help service.

9. Method of any of claims 5 - 8, wherein the event is an emergency situation, such as an accident, a disease attack, a violence situation, a crime, a fire, or a collection.

10. A contact service (3) in a telecommunication network to be used in a method of any of claims 5 - 9 for enabling a quick opening of a door of a building at an event having
a register with information for opening one or more doors in one or more buildings, the information comprising contact information and the address of the building, which is associated with a maintenance service or a property service, and the address of the buildings, the register matching contact information with the address informed by a help center, and
means for communicating with and sending or giving access to such information via the telecommunication network to trusted users upon request.

11. Contact service of claim 10, wherein the register furthermore comprises contact information of the house manager and links or information to invoicing and other services.

12. Contact service of claim 10 or 11, wherein the trusted user is a help center (2), such as an alarm center, an emergency response center, the police, a rescue service, an ambulance center, an alarm receiving center, a health service, a social service, a fire brigade, an authority, or other help or help service.
